# EUROPEAN PATENT APPLICATION

(11) **EP 4 842 003 A1**
(43) Date of publication of application: **18.11.2026**
(21) Application number: 25175835.5
(22) Date of filing: 12.05.2025
(51) Int. Cl.: H04N 23/50, H04N 23/51, H04N 23/52, H04N 23/57, G02B 7/02, G03B 17/55, H05K 1/02, H05K 7/20

(54) **AUTOMOTIVE CAMERA WITH A COOLING PLATE**

(71) Applicant: Connaught Electronics Ltd., County Galway H54 Y276 (IE)
(72) Inventor: Deepakaran, Harish, 600130 Chennai (IN); Nallusamy, Tamilselvan, 600130 Chennai (IN); Rana, Gyana-Ranjan, 600130 Chennai (IN)
(74) Representative: Jauregui Urbahn, Kristian

(57) **Abstract**

The automotive camera (2) comprises a rear housing (6), a front housing (9) and a lens unit (8), which is attached to the rear housing (6) and comprises an optical axis. The cooling plate (5) is placed under the circuit board (4), and in thermal contact with the circuit board (4). The bottom of the cooling plate (5) is thermally contacted to the bottom of the rear housing (6). The circuit board (4) is pushing down the cooling plate (5) to the bottom of the rear housing (6).

## Description

The invention relates to a device for a motor vehicle, configured to process image data of an image-capturing unit, with a housing. The invention also relates to a camera for a driver assistance device with such a device.

Camera systems for driver assistance devices must be compact and efficient. These cameras, often placed in tight spaces like wing mirrors or between the windshield and rearview mirror, need to pack a lot of technology into a small area. This includes lenses, a sensor (like a CCD), and various electronic components for image processing. Cooling these components in a small space is challenging. All these components generate heat, and in a compact design, dissipating this heat can be difficult. However, effective cooling is crucial to ensure the camera's reliability and longevity.

Automotive cameras come in many different designs and are used to capture both the outside environment and the interior of the vehicle. These cameras must withstand a wide range of conditions, including extreme temperature fluctuations and other harsh environmental factors. The biggest challenge is ensuring that these cameras can operate reliably and consistently, producing high-quality images that can be used by driver assistance systems. This is essential for the proper functioning of these systems, which rely on accurate and timely visual information.

As a result, when the camera system is in operation, particularly during extended periods of use or under conditions where the system is subjected to higher power demands, the lack of a supplementary cooling mechanism can lead to a significant increase in the overall system temperature. This temperature rise can, over time, exceed the allowable thermal limits prescribed for the camera's operation, potentially affecting the performance, longevity, or safety of the system in scenarios where the power usage is higher than normal operating conditions.

In an automotive camera that operates using a single or multiple PCB (Printed Circuit Board) model, the transfer of heat occurs primarily through the connecting pins, which serve as the main conduits for thermal dissipation from the PCB to the surrounding components. This design, however, lacks any additional or dedicated cooling system to actively cool down either the PCB itself or the various thermal components within the camera.

In US20170195531A1 a method and apparatus for heat sinking a camera module, which may be used in an automotive camera are described. Heating conductors and heat-conductive pads may be arranged in a parallel orientation within the housing of the camera module to dissipate heat produced by the printed circuit boards (PCBs) and other internal components. The heat-conductive pads may draw heat away from the PCB or other components and transfer it to the heat sink, which can be made of thermally conductive materials such as aluminum, aluminum alloys, or copper. The heat-conductive pads may also fill the air gaps within the housing of the camera module.

In EP2740260A1, a device for a motor vehicle is described. The device is configured to process image data from an image capturing unit and includes a housing. Inside the housing, at least two printed circuit boards (PCBs) with electronic components for processing the image data are arranged in parallel and spaced apart. A heat-dissipating element is positioned either inside or on the outside of the housing. This element is designed to dissipate heat generated by the electronic components during operation.

It is an object of the invention to provide a camera as well as a device for processing image data, which have a compact design but still ensure more efficient heat dissipation.

This object is solved by a camera and a method corresponding to the independent claims.

The proposed solution involves the implementation of an additional cooling plate to enhance the heat transfer from both at least one PCB (Printed Circuit Board) and at least one thermal component of the camera system. In a typical automotive camera, the thermal components that generate heat maybe listed as image sensors, image signal processors, system-on-chips (SoC), the power management integrated circuits, high-speed data interfaces and lens heaters. Additionally, a small amount of heat may be produced by limited onboard memory used for buffering or firmware storage.

The additional cooling plate, acting as a heat dissipation layer, serves the critical function of transferring the heat away from the PCB and its associated thermal components, thereby improving the overall thermal management of the system.

In an automotive camera for a motor vehicle, the camera includes a front housing with a lens unit and a rear housing that contains at least one circuit board and at least one cooling plate. The rear housing is possibly made in one piece leaving the interiorior as an open space, where for example the circuit board may be arranged. The housing may comprise a thermally conductive material to dissipate the heat.

The cooling plate may be a rectangular solid prism. The cooling plate comprises a first surface on the top, second surface on the bottom and lateral surfaces.

The first surface of the cooling plate may be a plane surface and be in direct contact with the circuit board across an entire area of the first surface. The second surface of the cooling plate may be a plane surface and be in direct contact with the bottom of the housing across an entire area of the second surface. In particular, the second surface may lie flat on the housing. The lateral side surfaces of the cooling plate may be in direct contact with the side of the camera rear housing.

In a further embodiment the first surface of the cooling plate which is in direct contact with the circuit board, may comprise protrusions. Those protrusions may be in direct contact with the heat sources on the circuit board.

In a further embodiment, the cooling plate has an opening to let a connector interface pass through. The circuit board can be connected to an image processing control unit by means of a connector interface.

The cooling plate is coated with a thermal interface material (TIM) which further enhances its heat conduction properties. The TIM, known for its superior heat transfer capabilities, can be directly applied to the thermal components, creating a highly efficient thermal bridge that connects the heat-generating components to the additional heat sink. The TIM ensures optimal contact between the components and the cooling plate, reducing thermal resistance and facilitating more efficient heat dissipation throughout the system.

By introducing this solution of an additional cooling plate with thermal interface material the heat generated by the PCB and the thermal components can be more effectively managed and transferred to the surrounding environment. This does not only help to prevent overheating during high-power operation but also ensures that the system remains within its allowable thermal limits, thereby enhancing the performance, longevity, and reliability of the camera system.

The circuit board may for example comprise a printed circuit board and may have the form of a laminated sandwich structure of at least one conductive and at least one insulating layer. Each of the at least one conductive layer may be designed with a pattern of traces, planes and other features, which may be similar to wires on a flat surface. The traces, planes and other features may for example be etched from the at least one conductive layer from a conductive material, such as copper, laminated onto or between the at least one insulating layer of a non-conductive substrate. The circuit board may comprise at least one electrical component, which may be assembled to at least one conductive pad on an outer layer of the circuit board, especially by means of soldering, which electrically connects the at least one electrical component to the outer layer.

The circuit board may for example comprise an imager chip, which may be designed to generate an image of part of a surrounding scenery of the automotive camera. The imager chip may for example form a flat structure and may be fixed to the circuit board, especially soldered to the circuit board, such that a light sensitive area of the imager chip is uncovered, meaning that no other part of the circuit board is blocking a line of sight of the light sensitive area of the imager chip.

The automotive camera may for example comprise a lens unit. The housing may comprise a lens opening and the lens unit may be connected to the lens opening or to the housing at the lens opening. The lens opening may be designed such that incident light can penetrate the lens unit and the lens opening and hit the imager chip. The light sensitive area of the imager chip may be perpendicular to an optical axis of the lens unit.

The cooling plate can preferably be configured in two main different ways. In the first configuration, the cooling plate is a solid monolithic plate formed from a single piece of thermally conductive material, such as aluminum or copper, without any internal cavities. In the second configuration, the cooling plate comprises an outer shell with at least one internal cavity filled with thermal gel. The outer shell may be formed from metal, and the thermal gel is selected for its heat transfer properties. Both configurations provide effective thermal management, with the choice depending on specific application requirements.

In one embodiment, the cooling plate includes an opening to allow a connector interface to pass through. In this configuration, a substantial portion of the second surface of the cooling plate is in contact with the rear housing. A substantial portion of the first surface of the cooling plate is in contact with the circuit board. For the purposes of this invention, a 'substantial portion' is defined as 50% or more of the relevant total surface area

An advantage of the implementations described above is an increased heat dissipation of occurring heat within the automotive camera by providing an additional channel for heat transfer from the circuit board to the housing via the cooling plate. Especially if the housing interior is sealed from the environment outside the automotive camera, occurring heat may be captured within the housing interior. Especially the circuit board, in particular the imager chip of the circuit board, may generate heat during operation. A constant operation over a certain period of time may lead to overheat of the imager chip and may limit a performance, lead to a functional failure or even a destruction of the imager chip or other components of the automotive camera or the circuit board. The cooling plate may establish a heat dissipation from a heat source, which may be the imager chip, via the cooling plate to the heat drain, which may be the housing and thus to the environment of the automotive camera.

According to at least one embodiment, a surface of the circuit board is parallel or approximately parallel to a surface of the bottom of the housing. The camera comprises a lens unit which is placed on the front housing. The bottom of the housing should be understood as the inner surface of the rear housing facing away to the lens unit through the optical axis.

According to at least one embodiment a gap between a surface of the circuit board and a surface of the housing is formed. This gap is partially or fully filled by the cooling plate, creating a thermal bridge. The cooling plate may be strategically positioned to prioritize heat dissipation from high-temperature components, such as the System on Chip (SoC). In areas where heat dissipation is less critical, the gap may remain unfilled, allowing for design flexibility and potential weight reduction.

The gap may extend over a distance of 0.1 mm to 10 mm with a typical value of 2-3 mm. This gap allows for component clearance and manufacturing tolerances. The cooling plate partially or fully fills this gap, ensuring efficient heat transfer while maintaining necessary spacing. The cooling plate may partially fill the gap, meaning, that the circuit board may rest on the cooling plate in a gapless fashion.

An advantage of the implementations described above is the flexible arrangement of the circuit board within the housing interior. The circuit board may have a degree of freedom during the assembly process in the housing interior, which might be necessary for alignment e.g. with the optical axis of the lens unit. Filling the gap may increase the heat transfer rate from the circuit board to the housing.

According to at least one further embodiment, the cooling plate and the housing made of a thermally conductive material.

The thermal conductivity of a material is a measure of its ability to conduct heat and may be measured in W/(m*K). Heat transfer may occur at a lower rate in materials of low thermal conductivity compared to materials of high thermal conductivity. For instance, metals may typically have a high thermal conductivity and thus may be efficient at conducting heat, while thermally insulating materials may have a low thermal conductivity.

The housing may for example comprise aluminum or an aluminum alloy with a thermal conductivity of 150 W/(m*K) to 250 W/(m*K), copper or a copper alloy with a thermal conductivity of 350 W/(m*K) to 400 W/(m*K) or other metals with a thermal conductivity of greater than 100 W/(m*K).

The cooling plate may for example comprise or consist of a metal, for example aluminum or an aluminum alloy or copper or a copper alloy, or a thermally conductive plastic material with a thermal conductivity of greater than 100 W/(m*K).

The cooling plate may for example comprise or consist of aluminum nitride or aluminum nitride ceramic with a thermal conductivity of 50 W/(m*K) to 350 W/(m*K) or another electrically insulating material with similar thermal conductivity. The housing may comprise equivalent material.

An advantage of the implementations described above is, that the occurring heat may dissipate faster from the heat source, which may be the imager chip on the circuit board, to the heat drain, which may be the housing and the environment. Using the thermally conductive material may enable a selection of a more powerful imager chip, which may increase the amount of heat, but may still be operable to efficient cooling.

According to at least one further embodiment, the cooling plate comprises an electrically insulating material.

The cooling plate may for example comprise aluminum nitride or aluminum nitride ceramic with a thermal conductivity of 10⁻¹¹ S/cm to 10⁻¹³ S/cm or another thermally conducting material with similar electrical conductivity.

An advantage of the implementations described above is, that a short circuit current from the circuit board to the housing via the cooling plate may be avoided. This may increase a product safety and reliability without limiting a complete usage of the circuit board in terms of wiring traces or planes of the conductive layer. Additionally, the heat dissipation may be increased independent of an electric insulation.

According to at least one further embodiment, the automotive camera comprises an imager chip, which is assembled to the circuit board.

The imager chip may also be referred to as a digital image sensor, in particular a charge-coupled device (CCD) sensor, a metal-oxide-semiconductor (MOS) sensor, a complementary metal-oxide-semiconductor (CMOS) sensor or a similar sensor. The imager chip may be designed to capture an image in a digital manner and provide the image as a quantity of digital data.

The imager chip may be assembled to the circuit board for example by a soldering process, such that the light sensitive area of the imager chip is uncovered.

An advantage of the implementations described above is that the automotive camera may capture a high-resolution image with the imager chip and at the same time provide an efficient cooling mechanism for an occurring heat of the imager chip.

According to at least one further embodiment, the automotive camera comprises a lens unit, which is connected to the front housing at a lens opening of the housing, so that incident light can penetrate the lens unit and the lens opening and hit the imager chip.

In other words, the incident light may penetrate the lens unit through the lens opening of the housing and impinge to the imager chip, so that the imager chip may capture the image.

The lens unit may comprise at least one optical lens, which may be designed to adapt a field of view to a predefined angle. The lens opening of the housing may be a flange or thread for example with a central through hole, which is designed to fit with the lens unit and align the lens unit with the housing and the imager chip.

An advantage of the implementations described above is, that the automotive camera may be used in various applications within a motor vehicle in a flexible way. The lens unit may be adapted to the individual needs of a position.

According to at least one further embodiment, the circuit board is connected to the housing by at least one additional pin wherein each of the at least one additional pin passes through the cooling plate and the cooling plate is in contact with the housing via a first surface of the cooling plate and with the circuit board via a second surface of the cooling plate. The circuit board is connected to the rear housing using at least one pin. These pins serve a dual purpose: they mechanically secure the circuit board and provide an additional thermal path for heat dissipation. The pins pass through the cooling plate, further enhancing the overall thermal management system.

The at least one additional pin may be exactly two additional pins. A total number of pins may then for example be three pins and the circuit board may be guided to a predefined and fixed position via the three pins. Alternatively, the at least one additional pin may be exactly three additional pins. Then the total number of pins may for example be four pins. The circuit board may for example have a rectangular shape and each of the four pins may be placed in one of four corners of the circuit board.

An advantage of the implementations described above is, that the heat transfer of occurring heat from the imager chip may be increased, in particular be significantly increased due to the higher quantity of heat transfer elements. Additionally, an assemble process of the circuit board is easier as the total number of pins may guide the circuit board to the predefined and fixed position with low tolerance. Furthermore, the stability of the circuit board inside the housing is increased.

In a further embodiment, the cooling plate is positioned and secured through a press-fit mechanism. When installed, the cooling plate is under compression, generating a counterforce against both the housing and the circuit board. This compression helps to overcome any manufacturing tolerances or gaps between components, ensuring direct contact between the housing and the second surface of the cooling plate, as well as between the circuit board and the first surface of the cooling plate. This arrangement guarantees optimal thermal contact between all components, maximizing heat transfer efficiency.

In another embodiment, the circuit board itself applies pressure to the cooling plate, pushing it towards the bottom of the camera rear housing. This pressure secures the cooling plate between the circuit board and the bottom of the camera rear housing, eliminating the need for additional pins to fix the cooling plate to the housing. This design simplifies assembly and potentially reduces the number of components.

An advantage of the implementations described above is, that a further mechanical flexibility may overcome the part clearance or the part tolerance of the housing versus the circuit board. Especially for the overdetermined pairing the cooling plate may balance the tolerance and safeguard the thermal contact from the circuit board to the housing. A further advantage of the implementations described above is the easy and cost effective production of the cooling plate.

According to a further aspect of the invention, a motor vehicle comprising an automotive camera according to the invention or a camera system according to the invention is provided.

According to a further aspect of the invention, a method for manufacturing an automotive camera, in particular an automotive camera according to the invention, is provided.

According to at least one further embodiment, the cooling plate and/or the housing is produced from thermally conductive material.

According to at least one further embodiment, the cooling plate and/or the housing is produced by means of an extrusion process or by means of a molding process.

Further implementations of the method for manufacturing an automotive camera according to the invention follow directly from the various implementations of the automotive camera according to the invention and vice versa. In particular, individual features and/or explanations with respect to the various implementations of the automotive camera according to the invention may apply analogously for respective implementations of the method according to the invention and vice versa.

In the following the invention is explained in detail with regard to special exemplary implementations and respective schematic drawings. In the drawings, identical or functionally identical elements may be equipped with the same reference signs. The description of identical or functionally identical elements is not necessarily repeated with regard to various figures.

In the figures:
Fig. 1 shows schematically a motor vehicle with an exemplary implementation of an automotive camera according to the invention;
Fig. 2 shows schematically a side view of an exemplary implementation of an automotive camera according to the invention;
Fig. 3 shows schematically a side view of a housing, a pin and a cooling plate of a further exemplary implementation of an automotive camera according to the invention;

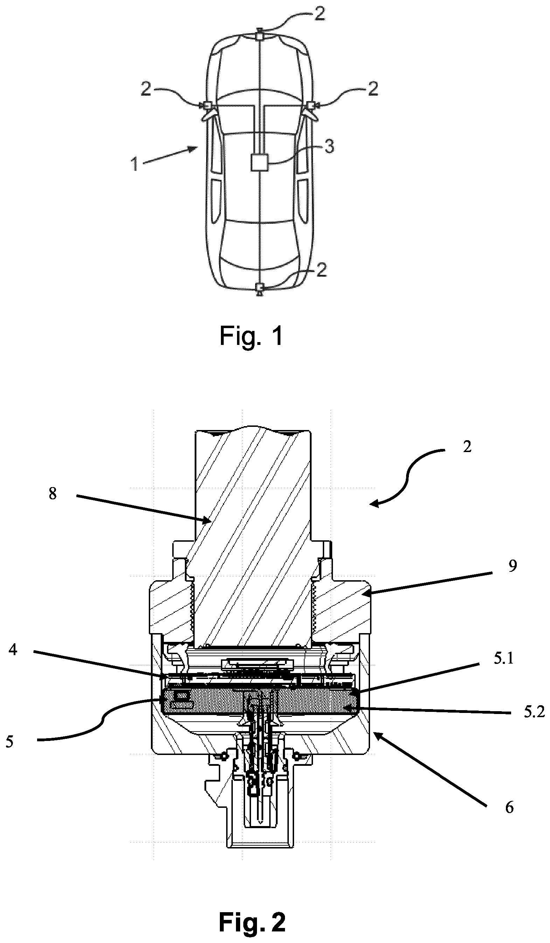

In Fig. 1, a motor vehicle (1) comprising at least one automotive camera (2), for example a camera, one or more side cameras and/or a rear camera, which is implemented according to an exemplary embodiment of the present invention is shown in a top view. Here, the motor vehicle (1) is formed as a passenger car as a non-limiting example. The motor vehicle (1) may for example comprise a control unit (3) to control the at least one automotive camera (2) and/or to receive camera images from the at least one automotive camera (2).

An automotive camera (2) comprises a rear housing (6), a front housing (9) and a circuit board (4), which is arranged within a housing interior of the rear housing (6), and a cooling plate (5), wherein the cooling plate (5) is placed and thermally connected under the circuit board (4). Bottom of the cooling plate (5) is also thermally connected to the bottom of the rear housing (6).

In the shown example, the motor vehicle (1) comprises for example four automotive cameras (2), which are distributed around the motor vehicle (1). One of the automotive cameras (2) is arranged in a rear area, one of the automotive cameras (2) is arranged in a front area of the motor vehicle (1) and the remaining two automotive cameras (2) are arranged in respective lateral areas, in particular in vicinities of the wing mirrors. The number and arrangement of the automotive cameras (2) may, however, be different in other examples. Alternatively or in addition, one or more automotive cameras according to the invention may be arranged for capturing an interior space or a passenger compartment of the motor vehicle (1).

The automotive cameras (2) are, in particular, installed to a respective individual motor vehicle component. The motor vehicle component may for example be a bumper or an exterior mirror or a side trim. The motor vehicle component may also be a headliner or an interior trim or a cover of a steering wheel center or an interior mirror. The mentioned motor vehicle components are to be considered only as non-limiting examples.

Fig. 2 shows a side view of an exemplary implementation of an automotive camera (2) according to the invention, which may be used in a motor vehicle (1) or the corresponding electronic vehicle guidance system described with respect to Fig. 1, for example. The automotive camera (2) comprises a rear housing (6) and a lens unit (8), which is attached to the rear housing (6) and comprises an optical axis. According to the invention, the cooling plate (5) is placed under the circuit board (4) and the sides of the cooling plate (5) are thermally contacted to the rear housing (6). The bottom of the cooling plate (5) is thermally contacted to the bottom of the rear housing (6). The circuit board (4) is pushing down the cooling plate (5) to the bottom of the rear housing (6).

A gap may be formed between a surface of the circuit board (4) and a surface of the rear housing (6). The cooling plate (5) may at least partially fill the gap between the circuit board (4) and the rear housing (6). The cooling plate (5) and the rear housing (6) may be parallel to each other.

The cooling plate (5) comprises a first surface (5.1), a second surface (5.2) and lateral surfaces (not shown with reference numbers). The first surface (5.1) is the upper part of the cooling plate (5). The upper part should be understood as the direction through the lens unit (8) according to the optical axis of the camera. The second surface (5.2) is the lower part of the cooling plate (5). The lower part should be understood as the direction through the rear housing (6) according to the optical axis of the camera. The lateral surfaces are the four lateral sides of the cooling plate (5).

In the embodiment of the invention at least part of the first surface (5.1) of the at least one cooling plate (5) is in thermal contact with the circuit board (4) and at least part of the second surface (5.2) of the at least one cooling plate (5) is in thermal contact with the bottom of the rear housing (6). The phrase "at least part" in this context refers to the minimum requirement for thermal contact between surfaces. It specifies that there must be at minimum some portion of the surface area in thermal contact, though this could extend to the entire surface. The actual contact area can be larger than this minimum requirement, providing flexibility in the design implementation. Accordingly different implementation approaches, including partial contact areas, multiple contact points, or various contact configurations.

This flexibility is particularly important in thermal management systems where different design constraints or manufacturing considerations might make full surface contact impractical or unnecessary.

A substantial portion of the second surface (5.2) is in thermal contact with the rear housing. The substantial portion can be interpreted as at least 50% of the total surface area of the second surface of the cooling plate

The rear housing (6) may seal the housing interior in an air-tight or partially air-tight manner, such that only few or no exchange of air from the housing interior to an environment outside the rear housing (6) may be possible. Thus, a ventilation of the circuit board (4) may not be possible or may be limited.

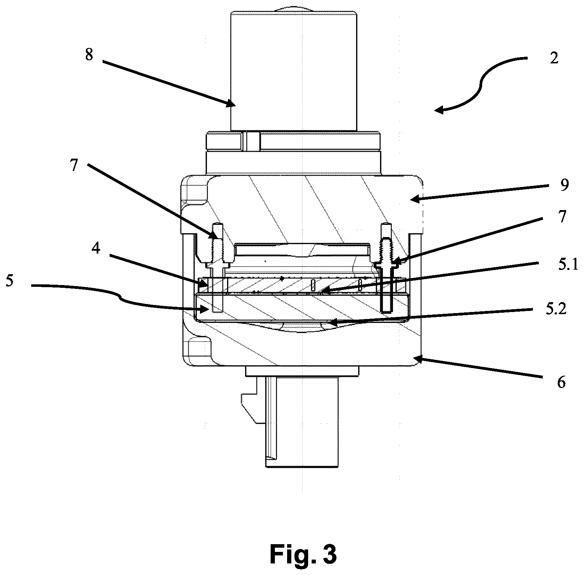

Fig. 3 shows schematically a side view of a housing, a pin and a cooling plate of a further exemplary implementation of an automotive camera according to the further embodiment of the invention. According to Fig. (3), the circuit board (4) is connected to the rear housing (6) with at least one pin (7). The at least one pin (7) passes through the circuit board (4) and fixes the cooling plate (5) to the circuit board (4).

The imager chip and at least one additional component on the circuit board (4) may generate heat. The heat or a major part of the heat may be transferred to the circuit board (4). The cooling plate (5) may transfer the major part of the heat or most of the major part of the heat to the rear housing (6). In addition, the pin (7) may also transfer an additional part of the major part of the heat to the rear housing (6). The rear housing (6) may dissipate the heat or a significant part of the heat to the environment outside the rear housing (6). The cooling plate (5) may be part of an effective chain of cooling components with a high thermal conductivity, which may cool the circuit board (4) and establish a working temperature in the housing interior, which is suitable for a powerful circuit board (4).

## Claims

1. A camera (2) for a motor vehicle (1) comprising a front housing (9) including a lens unit (8), a rear housing (6) including at least one circuit board (4) and at least one cooling plate (5), the at least one cooling plate (5) comprises a first surface (5.1), a second surface (5.2) and lateral surfaces **characterized in that**, at least part of the first surface (5.1) of the at least one cooling plate (5) is in thermal contact with the circuit board (4) and at least part of the second surface (5.2) of the at least one cooling plate (5) is in thermal contact with the bottom of the rear housing (6).

2. Camera (2) according to claim (1) **characterized in that**, a substantial portion of the second surface (5.2) of the at least one cooling plate (5) is in thermal contact with the bottom of the rear housing (6).

3. Camera (2) according to claim 1 or 2 **characterized in that**, the cooling plate (5) is made of an aluminum material.

4. Camera (2) according to any of the preceding claims **characterized in that**, the cooling plate (5) is made of a solid monolithic plate.

5. Camera (2) according to claims 1 to 3 **characterized in that**, the cooling plate (5) is filled with a thermal gel.

6. Camera (2) according to any of the preceding claims **characterized in that**, the cooling plate (5) is fixed to the circuit board (4) with at least one contact pin (7).

7. Camera (2) according to claims 1 to 5 **characterized in that**, the cooling plate (5) is pressed by the circuit board (4) towards the bottom of the camera rear housing (6).

8. Camera (2) according to any of the preceding claims **characterized in that**, the cooling plate (5) is in thermal contact with at least one lateral side of the camera rear housing (6).

9. Camera (2) according to any of the preceding claims **characterized in that**, the cooling plate (5) is in thermal contact with all four lateral sides of the camera rear housing (6).

10. Camera (2) according to any of the preceding claims **characterized in that**, the cooling plate (5) and the camera rear housing (6) are in thermal contact via a thermal interface material.

11. Camera (2) according to claim 1 **characterized in that**, the cooling plate (5) has an opening to let a connector interface pass through.

12. A motor vehicle (1) comprising a camera (2) according to one of the preceding claims.

13. Method for cooling an automotive camera (2) **characterized in that**, the camera (2) comprising a front housing (9) including a lens unit (8), a rear housing (6) including at least one circuit board (4) and at least one cooling plate (5), the cooling plate (5) comprising a first surface (5.1), a second surface (5.2) and lateral surfaces, the cooling plate (5) being arranged within the rear housing (6), the first surface (5.1) being arranged in thermal contact with the circuit board (4) and the second surface (5.2) being arranged in thermal contact with the bottom surface of the rear housing (6).
